Europäisches Patentamt

European Patent Office

Office européen des brevets

(19)

(11) Publication number: **0 251 368 B1**

(12) **EUROPEAN PATENT SPECIFICATION**

(45) Date of publication of patent specification: **04.09.91**

(21) Application number: **87201069.9**

(22) Date of filing: **09.06.87**

(51) Int. Cl.5: **F02M 37/22,** B01D 29/13, B01D 29/74

(54) **Fluid filtration device.**

(30) Priority: **24.06.86 IT 1810786**

(43) Date of publication of application:
**07.01.88 Bulletin 88/01**

(45) Publication of the grant of the patent:
**04.09.91 Bulletin 91/36**

(84) Designated Contracting States:
**AT BE CH DE ES FR GB GR IT LI LU NL SE**

(56) References cited:
**DE-A- 3 538 282**
**US-A- 3 245 541**
**US-A- 4 204 961**
**US-A- 4 624 779**

**SOVIET INVENTIONS ILLUSTRATED**

(73) Proprietor: **UNIVERSAL FILTER ITALIANA S.p.A.**
**Zona Industriale**
**I-37060 Nogarole Rocca (Verona)(IT)**

(72) Inventor: **Fava, Gilberto**
**1, Via Calvi**
**Fraz. Cerese I-46030 Virgilio (Mantova)(IT)**
Inventor: **Girondi, Giorgio**
**14, Via Carbone**
**I-46100 Mantova(IT)**

(74) Representative: **Corradini, Corrado**
**4, Via Dante Alighieri**
**I-42100 Reggio Emilia(IT)**

Rank Xerox (UK) Business Services

## Description

This invention relates to a fluid filtration device.

In fluid liquid or aeriform conveying circuits connected to machines in general, it is known to provide filtering surfaces which are traversed by said fluids in order to retain impurities in the form of solid particles contained in suspension or the like. This is so for example in the case of filters for the diesel oil feed to automobile diesel engines.

In the operation of said filters, a difficulty is encountered in that they tend to clog, so preventing passage of the diesel oil or fluid in general, with consequent stoppage of operation of the machine to which the fluid circuit is connected, this clogging deriving from various oauses but always related to the deposition of solid substances on the filtering surface.

In the case of filters for the diesel oil feed to automobile diesel engines, for example, it happens that during vehicle stoppages in cold periods the diesel oil falls to such a temperature that paraffin separates and deposits on the filtering surface to clog it, so that it becomes impossible to start the engine, as the diesel oil is unable to pass through the filtering surface.

US-A-4 204 961 discloses a filter apparatus with cleaning function which provides for the rotation of a cylindrical filter element about its axis to centrifugally throw-off the debris which has been filtered out of the fluid and has collected on the outside of the filter element.

The apparatuses according to US-A-4204961 comprise a standard filter element contained in a casing having inlet and outlet parts for the fluid to be filtered and for the filtered fluid.

The casing has a head through which a shaft extends axially within the casing, where it supports the filtering element.

The head has a flange for the attachement of a motor whose shaft is coaxial with and engaged to the filtering apparatus shaft.

The debris thrown-off thanks to the rotation fall within the casing and may be removed.

The above mentioned apparatuses have some drawbacks when used in filtering the diesel oil under low temperatures, when paraffin separates and deposits both on the filtering surface or falls within the lower region of the casing outside the filtering element.

The main object of the present invention is to provide a fluid filtration device which allows easy declogging of the filter whenever this is considered necessary.

A subsidiary object of the invention is to provide a device which is of considerable simplicity so as to ensure low cost and maximum operational reliability.

Said objects are attained by the fluid filtration device according to the claim 1.

Characteristics and advantages of the invention will be more apparent from the description of a preferred but not exclusive embodiment of the invention illustrated by way of non-limiting example on the accompanying drawings in which:

Figure 1 is a side view of the device, shown half in section on an axial plane;

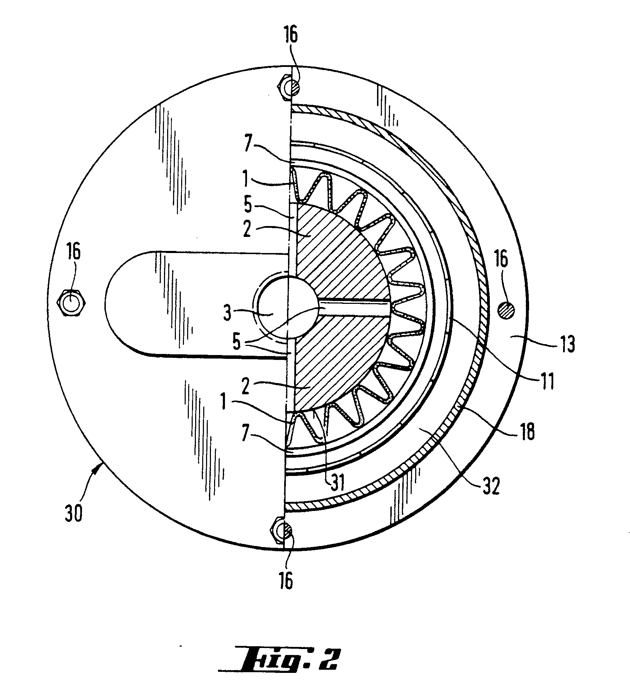

Figure 2 is a partial section on the plane II-II of Figure 1.

In said figures, which relate to a filtration device for the diesel oil feed to automobile diesel engines, the reference numeral 1 indicates a concertina-folded filtering surface disposed adhering to the outer surface 31 of an element 2 which can be rotated by drive means, not shown on the figure, and consisting for example of a lower motor connected into the electrical circuit of an automobile, and provided with controls for its operation by an operator.

Said element 2 comprises an inner axial duct 3 and a plurality of regularly distributed radial through bores 5 which allow the inner duct 3 to communicate with the outer surface 31 embraced by the filtering surface 1.

The outer surface 31 is of cylindrical shape. The filtering surface 1 is also of overall cylindrical shape and is superposed on the surface 31 so that it covers this latter. The filtering surface 1 is rigidly joined to the element 2 by rings 7, 8 pressed by ring nuts 9, 10 associated with the element 2 by means of a thread. Blades 11 extending axially to a limited extent project from a base which is rigid with that end of the element 2 to be disposed lowerly during operation, their purpose being to crush any falling paraffin granules.

The device casing 30 comprises two flanges 12 and 13 assembled by tie bolts 16 and provided with supports 33 and 34 for the element 2 and seal gaskets 14 and 15.

Said flanges 12 and 13 are connected together by a wall 18 which defines a space portion 32 surrounding the filtering surface 1 and into which there open a port 12a provided in the upper flange 12 for entry of the fluid to be filtered, and a discharge hole 13a provided in the lower flange 13 for the material retained by the filtering surface 1. A port 12b for exit of the filtered fluid from the device is positioned in the flange 12 in correspondence with the opening of the inner duct 3 of the element 2. The space portion 32 defines a lower region between the lower end of the filtering surface 1 and the lower flange 13, to receive material which has been retained by the filtering surface 1 and then separated therefrom by the rotation of the element 2.

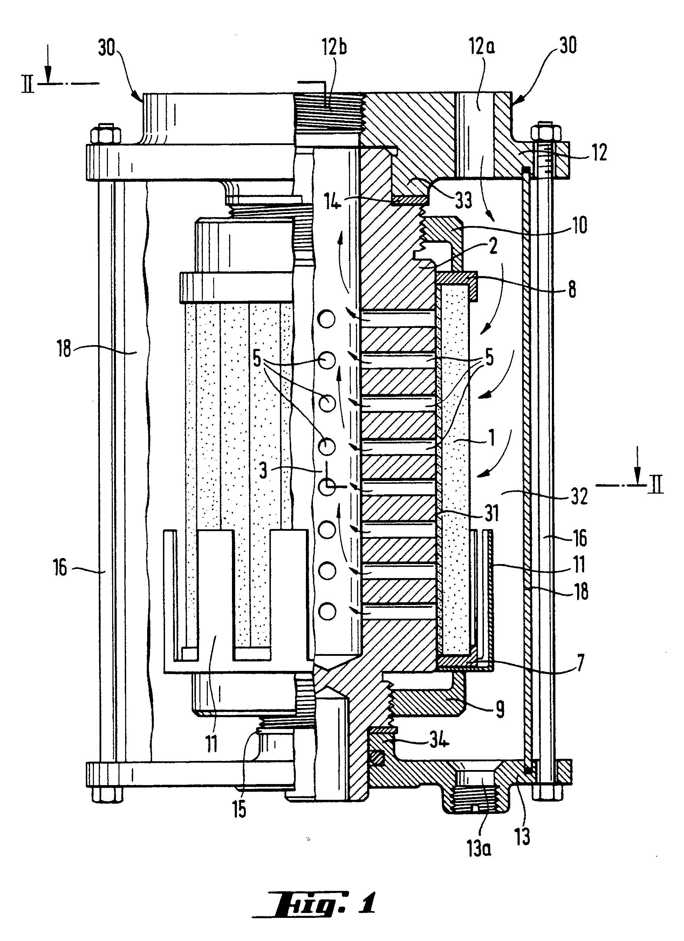

The invention in the form of the described embodiment obviates all difficulties relating to the starting of automobile diesel engines in a cold climate. In this respect, before starting the engine it is necessary only to operate the motor for a short time period in order to rotate the element 2 and separate by centrifugal force the paraffin deposited on the filtering surface 1. In this manner, the filter is freed of all clogging and the engine can then be started, as the diesel oil feed can circulate perfectly along the path indicated by the arrows in Figure 1, by entering the device through the port 12a, then passing through the filtering surface 1 from the space portion 32 defined about it by the wall 18, then passing through the radial through bores 5, and finally entering the inner duct 3 and leaving through the port 12b.

During rotation of the element 2, the blades 11 crush any paraffin granules into small particles in order to facilitate their liquefaction and their passage through the filtering surface 1.

The device operates analogously when used as a combustion air filter for internal combustion engines. In this case, the user rotates the filter support element at regular intervals so as to keep it clean, resulting in long life and high efficiency with the consequent possibility of reducing its dimensions. In this case, the blades 11 are not present. The material which is retained by the filtering surface 1 and then separated therefrom by rotation of the element 2 deposits in the lower region, and can be evacuated from this through the hole 13a (which is normally closed).

The described device can undergo numerous modifications. For example, the drive means for rotating the filter support element can be of any type. In addition, said drive means can be controlled automatically, and if the device is used for filtering the combustion air of internal combustion engines this control can be effected by a signal from the intake manifold proportional to the vacuum in the manifold, which depends on the degree of clogging of the filter.

## Claims

1. A fluid filtration device comprising:
   - a filtering surface (1) and a casing (30) which encloses the filtering surface (1) and has an inlet port (12a) for the fluid to be filtered and an outlet port (12b) for the filtered fluid;
   - an element (2) connected to drive means arranged to rotate it about a shaft comprising an inner axial duct (3) communicating with said outlet port (12b), and through bores (5) arranged to put an outer surface (31) of the element (2) into communication with the inner duct (3);

said filtering surface (1) being disposed to cover said outer surface (31) and being rigid therewith;
   - a space portion (32) defined by the casing (30) which surrounds the filtering surface (1) and communicates with said inlet port (12a)

characterized by blades (11) disposed about the filtering surface and connected to the lower end of the rotation-enabled element (2) and extending parallel to the axis of rotation.

2. A device as claimed in claim 1, characterised in that the casing (30) comprises two flanges (12 and 13) which are connected together by an outer wall (18) defining the space portion about the filtering surface (1), and which are provided with supports (33, 34) for the element (2), and which are assembled by tie bolts (16), one flange (12) being provided with the inlet port (12a) for the fluid to be filtered and the outlet port (12b) for the filtered fluid, and the other flange (13) being provided with a discharge hole (13a) for the material retained by the filtering surface (1).

3. A device as claimed in claim 1, characterised in that said filtering surface (1) is kept adhering to the rotation-enabled element (2) by rings (7, 8) pressed by ring nuts (9, 10) mounted on said element (2).

## Revendications

1. Dispositif de filtration de fluide comprenant
   - une surface de filtrage (1) et un boîtier (30) qui entoure la surface de filtrage (1) et comporte un orifice d'entrée (12a) Pour le fluide à filtrer et un orifice de sortie (12b) pour le fluide filtré;
   - un élément (2) connecté à des moyens d'entraînement disposés pour faire tourner celui-ci autour d'un arbre, comportant un conduit axial interne (3) en communication avec ledit orifice de sortie (12b) et des passages (5) disposés pour mettre en communication une surface externe (31) de l'élément (2) avec le conduit interne (3); ladite surface de filtrage (1) étant disposée pour recouvrir ladite surface externe (31) et étant solidaire de celle-ci;
   - un espace (32) défini par le boîtier (30) qui entoure la surface de filtrage (1) et se trouve en communication avec ledit orifice d'entrée (12a),

caractérisé par des lames (11) disposées autour de la surface de filtrage et reliées à l'extrémité inférieure de l'élément susceptible de rotation (2) et s'étendant parallèlement à l'axe de rotation.

2. Dispositif tel que revendiqué à la revendication 1, caractérisé en ce que le boîtier (30) comporte deux brides (12 et 13) qui sont connectées l'une à l'autre par une paroi extérieure (18) définissant l'espace autour de la surface de filtrage (1) et qui comportent des supports (33,34) pour l'élément (2) et qui sont assemblées par des boulons de fixation (16), une bride (12) étant prévue avec l'orifice d'entrée (12a) pour le fluide à filtrer, et l'orifice de sortie (12b) pour le fluide filtré, et l'autre bride (13) étant prévue avec un trou de décharge (13a) pour la matière retenue par la surface de filtrage (1).

3. Dispositif tel que revendiqué à la revendication 1, caractérisé en ce que ladite surface de filtrage (1) est maintenue en adhérence avec l'élément susceptible de rotation (2) par des bagues (7,8) pressées par des écrous annulaires (9,10) montés sur ledit élément (2).

**Patentansprüche**

1. Vorrichtung zum Filtrieren von Fluiden mit
   - einer Filteroberfläche (1) und einem Gehäuse (30), welches die Filteroberfläche (1) enthält und eine Einlaßöffnung (12a) für das zu filternde Fluid und eine Auslaßöffnung (12b) für das gefilterte Fluid;
   - ein Element (2), welches mit einer Antriebseinrichtung verbunden ist, die vorgesehen ist, dieses um eine Welle mit einer inneren Axialleitung (3) zu drehen, die mit der Auslaßöffnung (12b) zusammenwirkt, und durch Bohrungen (5), die so ausgebildet sind, um eine Außenfläche (31) des Elementes (2) in Zusammenwirkung mit der Innenleitung (3) zu bringen; die Filteroberfläche (1) ist so angeordnet, daß sie die Außenfläche (31) bedeckt und mit dieser fest ist;
   - einem Zwischenraum (32), der durch das Gehäuse (30) definiert ist, welches die Filteroberfläche (1) umgibt und mit der Einlaßöffnung (12)) zusammenwirkt,
   **dadurch gekennzeichnet, daß**
   Lamellen (11) um die Filteroberfläche angeordnet und mit dem unteren Ende des die Drehung ermöglichenden Elementes (2) verbunden sind und sich parallel zu der Drehachse erstrecken.

2. Vorrichtung nach Anspruch 1,
   **dadurch gekennzeichnet, daß**
   das Gehäuse (30) zwei Flansche (12 und 13) aufweist, die durch eine Außenwand (18) miteinander verbunden sind, welche den Zwischenraum um die Filteroberfläche (1) definiert, und die mit Stützen (33, 34) für das Element (2) versehen sind, und die durch Spannschrauben (16) zusammengefügt sind, wobei ein Flansch (12) mit der Einlaßöffnung (12a) für das zu filternde Fluid und der Auslaßöffnung (12b) für das gefilterte Fluid versehen ist, und wobei der andere Flansch (13) mit einer Abgabeöffnung (13a) für das durch die Filteroberfläche (1) zurückgehaltene Material versehen ist.

3. Vorrichtung nach Anspruch 1,
   **dadurch gekennzeichnet, daß**
   die Filteroberfläche (1) an dem die Drehung ermöglichenden Element (2) durch Ringe (7, 8) haftend gehalten ist, die durch Ringmuttern (9, 10) zusammengepreßt sind, die an dem Element (2) befestigt sind.

EP 0 251 368 B1

Fig. 1

5

EP 0 251 368 B1

Fig. 2

6